# EUROPEAN PATENT SPECIFICATION

(11) **EP 3 578 457 B1**
(45) Date of publication and mention of the grant of the patent: **13.10.2021**
(21) Application number: 19178575.7
(22) Date of filing: 05.06.2019
(51) Int. Cl.: B64C 3/58, B64C 9/00, B64C 9/14, B64D 45/00, B64C 13/16, B64C 9/34, B64C 13/20, G05D 1/02, G01M 5/00

(54) **METHOD AND APPARATUS FOR REDUCING AIRCRAFT WING BENDING MOMENT**
VERFAHREN UND VORRICHTUNG ZUR REDUZIERUNG DES FLUGZEUGFLÜGELBIEGEMOMENTS
PROCÉDÉ ET APPAREIL DE RÉDUCTION DU MOMENT FLÉCHISSANT D'UNE AILE D'AÉRONEF

(30) Priority: 06.06.2018 GB 201809316
(43) Date of publication of application: 11.12.2019
(60) Divisional application: 21192851.0
(73) Proprietor: GE Aviation Systems Limited, Bishops Cleeve Cheltenham Gloucestershire GL52 8SF (GB)
(72) Inventor: SCHWINDT, Stefan, Cheltenham, Gloucestershire GL52 8SF (GB)
(74) Representative: Openshaw & Co.

(56) References cited:
- WO-A1-2015/088967
- CN-A- 107 271 090
- US-A1- 2016 200 420
- US-A1- 2018 099 740
- US-B1- 9 064 357
- US-B2- 9 199 726

## Description

### TECHNICAL FIELD

The disclosure relates to a method and apparatus for reducing a bending moment of an aircraft when a sensed bending moment exceeds a predetermined threshold.

### BACKGROUND

Aircraft, during flight, are susceptible to varying environmental conditions. Particularly, varying atmospheric conditions such as wind, pressure, and weather, can lead to temporary high wing loading or bending moment. During flight, wind gusts can provide for gust loads causing an uncontrolled increase in lift. Specifically, regulations specify that the gust loads that an aircraft needs to be able to withstand must meet worst-case scenario standards. Such regulations are traditionally met by providing additional material or structure extending through the aircraft fuselage and wings to strengthen the wings.

One existing solution includes accelerometer strain gauges positioned in the wings of the aircraft. Once a gust acts upon the wing, the accelerometer measures the force imparted to the wings. The wing deploys spoilers to destroy the excess lift generated by the gust. However, such accelerometers can only measure gust forces as an acceleration, and can fail to identify a bending moment that remains at critical after initially deploying the spoilers, having a zero acceleration, or a small acceleration at maximum bending moment.

US 9 199 726 B2 discloses wing load alleviation methods and apparatus. WO 2015/088967 A1 discloses a fiber optic sensing aeronautical flight control system for various manned and unmanned air and space vehicle applications. US 9 064 357 B1 discloses a system and method for alleviating an anomaly in a structure. CN 107 271 090 A disclose a method for monitoring the bending moment of an airplane wing in real time based on an FBG (fiber Bragg grating). US 2018/099740 A1 discloses a system and method for correcting wing twist of an aircraft.

### BRIEF DESCRIPTION

The invention is defined by the appended claims. In the following, apparatus and/or methods referred to as embodiments that nevertheless do not fall within the scope of the claims should be understood as examples useful for understanding the invention.

### BRIEF DESCRIPTION OF THE DRAWINGS

In the drawings:
FIG. 1 is a front view of an aircraft depicting an updraft bending the aircraft wings, which have deployable spoilers.
FIG. 2 is a top down schematic view of another aircraft including a wing loading reduction system including sensors to sense a change in the shape of the wing.
FIG. 3 is a front view of the aircraft of FIG. 2 with deployed wing spoilers, in accordance with aspects described herein.
FIG. 4 is a block diagram illustrating a method of operating the aircraft of FIG. 2 according to the wing loading reduction system.
FIG. 5 is a top down schematic view off yet another aircraft including a wing loading reduction system including an optical fiber, in accordance with aspects described herein.

### DETAILED DESCRIPTION

The disclosure relates to a wing loading reduction system and method for monitoring a shape of a wing in order to decrease bending moment at a wing root where a wing attaches to an aircraft fuselage. While this description is primarily directed toward a monitoring system for an aircraft, it is also applicable to any environment susceptible to fluid forces acting against portions of the vehicle, such as that of a watercraft or other vehicle.

As used herein, the term "forward" or "upstream" refers to moving in a direction toward an inlet or beginning position, or a component being relatively closer to the inlet or beginning position as compared to another component. The term "aft" or "downstream" used in conjunction with "forward" or "upstream" refers to a direction toward an outlet or end position or being relatively closer to the outlet or end position as compared to another component. Furthermore, as used herein, the term "set" or a "set" of elements can be any number of elements, including only one.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

Also as used herein, while sensors can be described as "sensing" or "measuring" a respective value, sensing or measuring can include determining a value indicative of or related to the respective value, rather than directly sensing or measuring the value itself. The sensed or measured values can further be provided to additional or separate components. Such a provision can be provided as a signal, such as an electrical signal, to said additional or separate components. For instance, the measured value can be provided to a controller module or processor, and the controller module or processor can perform processing on the value to determine a representative value or an electrical characteristic representative of said value.

As used herein, a "system," a "controller," or a "controller module" can include at least one processor and memory. Non-limiting examples of the memory can include Random Access Memory (RAM), Read-Only Memory (ROM), flash memory, or one or more different types of portable electronic memory, such as discs, DVDs, CD-ROMs, etc., or any suitable combination of these types of memory. The processor can be configured to run any suitable programs or executable instructions designed to carry out various methods, functionality, processing tasks, calculations, algorithms, or the like, to enable or achieve the technical operations or operations described herein. The program can include a computer program product that can include machine-readable media for carrying or having machine-executable instructions or data structures stored thereon. Such machine-readable media can be any available media, which can be accessed by a general purpose or special purpose computer or other machine with a processor. Generally, such a computer program can include routines, programs, objects, components, data structures, algorithms, etc., that have the technical effect of performing particular tasks or implement particular abstract data types.

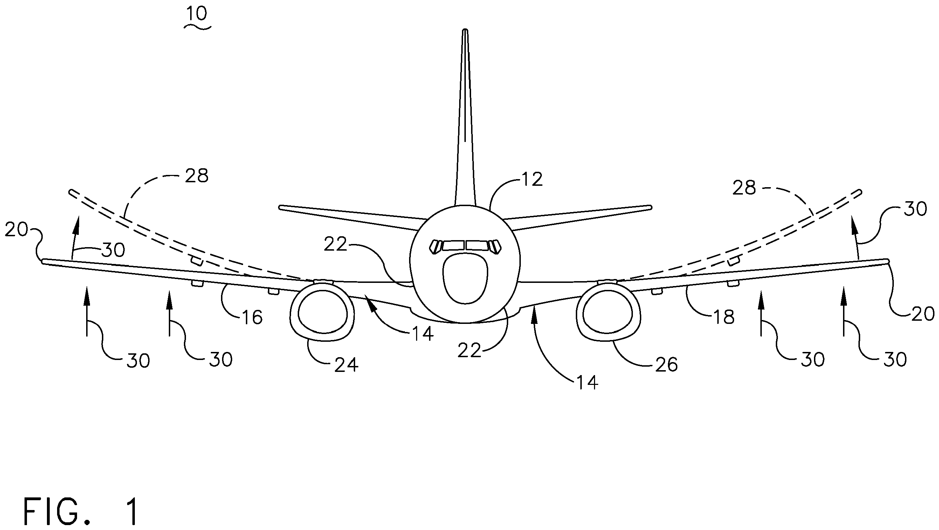

Referring now to FIG. 1, an aircraft 10 includes a fuselage 12, with a pair of wings 14 as a first wing 16 and a second wing 18 extending from the fuselage 12. The wings 14 extend between a tip 20 and a root 22. A first engine 24 can mount the first wing 16 and a second engine 26 can mount to the second wing 18. During operation of the aircraft 10, a gust 30 can act upon the wings 14, bending one or both of the wings 14 into bent positions 28, shown in broken line, and increasing the load on the wings 14 and bending moment at the root 22 of the wings 14 proportional to the gust load of the gust 30.

Such bending of the wings 14 due to the gusts 30 can include movement of the wings 14 in a plurality of directions, which can lead to a change in shape or position of the wings 14. Such a change in "shape" or "position" can include movement of the wings 14 in an upward or downward direction, shown as an upward direction in FIG. 1. Such and upward or downward movement, is based upon a fixed root 22, such that upward or downward movement is curvature of the wing relative to the fixed root 22. Additionally, movement of the wings 14 can be in a forward or aft direction, such as toward a nose or tail or the aircraft 10. Furthermore, such movement can be a twisting movement of the wings 14, such as twisting about a longitudinal axis of the wings. Further yet, such movement can be a combination of any movement described above, or can be any movement, change in shape, or change in position of the wings 14 due to gust loading acting on the wings 14 of the aircraft 10 during flight.

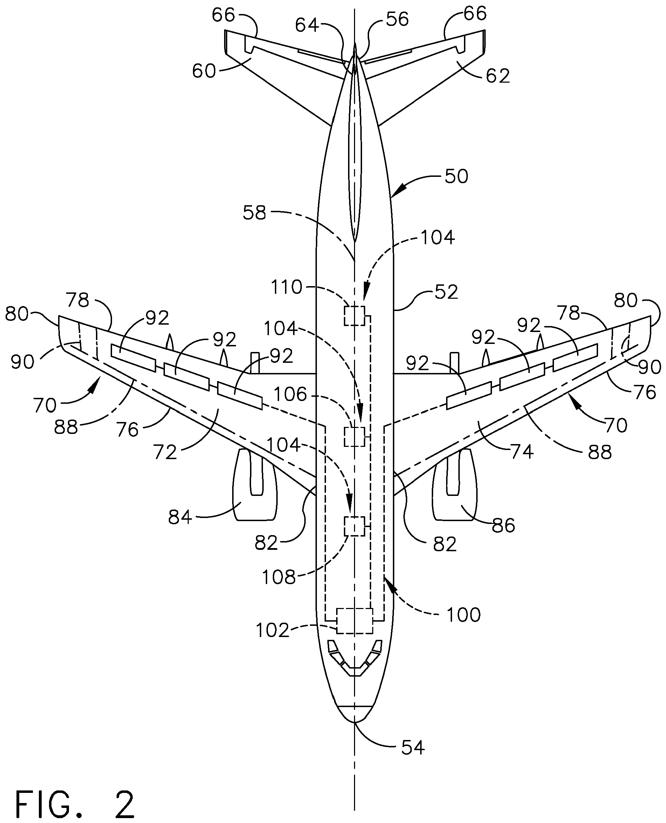

Referring now to FIG. 2, another aircraft 50 includes a fuselage 52 extending between a nose 54 and a tail 56, defining a longitudinal centerline 58 therebetween. A tail section 56 includes a first horizontal stabilizer 60, a second horizontal stabilizer 62, and a rudder 64, or vertical stabilizer. An elevator 66 is provided on each of the first and second horizontal stabilizers 60, 62.

A pair of wings 70, as a first wing 72 and a second wing 74, mount to and extend from the fuselage 52. Each wing 72, 74 includes a leading edge 76 and a trailing edge 78, and extends from a tip 80 to a root 82. A first engine 84 is provided on the first wing 72 and a second engine 86 is provided on the second wing 74. A spar 88, schematically shown in broken line, extends along and interior of each wing 72, 74, with ribs 90 coupled to the spar 88, forming a structural frame for the first and second wings 72, 74. While only a single spar 88 and two ribs 90 are shown in each of the first and second wings 72, 74, it should be understood that any number of spars 88 and ribs 90 are contemplated, as may be suitable for the particular aircraft 50 or wings 72, 74 thereof.

One or more spoilers 92 can be provided on each of the first and second wings 72, 74, shown as three spoilers 92 on each wing 70. The spoilers 92 can form a portion of the wings 70 that extend away from the surface of the wing 70, while remain flush with the wings 70 when the spoilers 92 are not operational. Optionally, the spoilers 92 can be actuable to open an opening in the wings 70, permitting a volume of air to pass through the wings 70. It is preferred that each wing 70 includes the same number of spoilers 92, in the same position to ensure level flight during simultaneous operation of the spoilers 92.

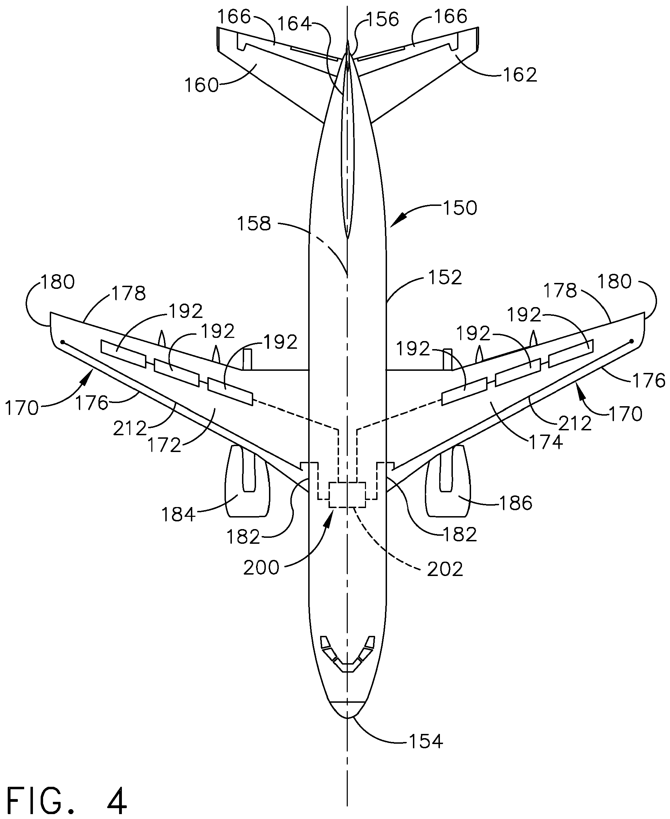

A system, such as a wing loading reduction system 100, can be included on the aircraft 50. The wing loading reduction system 100 can include a controller module 102 and a set of sensors 104, illustrated as a first sensor 106, a second sensor 108, and a third sensors 110, and can be interconnected with one or more of the spoilers 92. The sensors 104 can be positioned to have visibility of the wings 14, such as along the fuselage 12, or can be positioned at various positions to measure the wings 14. In non-limiting examples, the sensors 104 can be one or more of a camera, an ultrasound sensor, a radio detection and ranging (RADAR) sensor, a light imaging detection and ranging (LIDAR) sensor, or any other sensor suitable for measuring a position or shape of the wings 70, such as fiber optical sensors, described in FIG. 4. The sensors 104 communicatively couple to the controller module 102. The first sensor 106 can be provided at a center of the fuselage 52, equidistant from the nose 54 and the tail 56. In another example, the sensors can be positioned at 1/3 distance or 2/3 distance between the nose 54 and the tail 56. Alternatively, the first sensor 106 can be aligned with a span-line axis of the wings 70, where a span-line is defined extending between the tip 80 and the root 82 of the wings, equidistant from the leading edge 76 and the trailing edge 78. Furthermore, one or more of the sensors 104 can be positioned on top of the fuselage 52, aligned with the centerline 58 of the fuselage 52. In any case, the positioning of the sensors 104 should be such that the sensors 104 can make suitable positional or shape measurements of the wings 70.

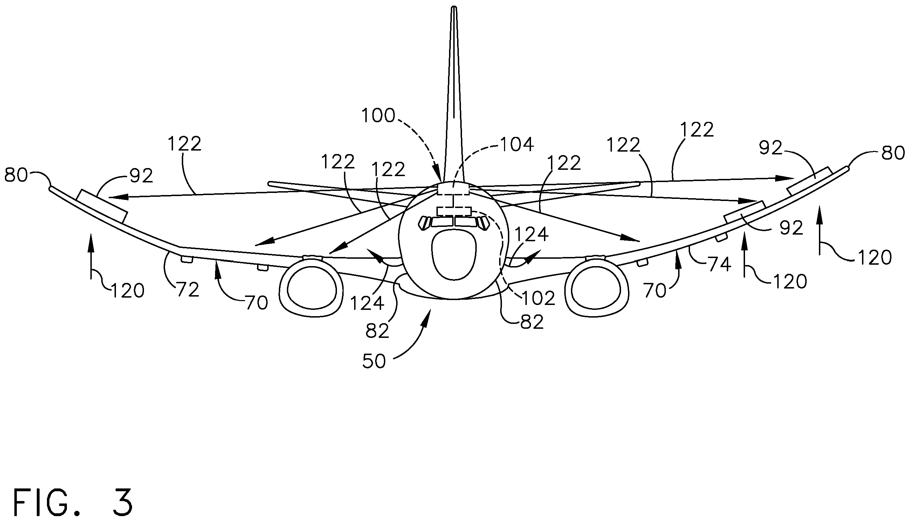

Referring now to FIG. 3, operation of the wing loading reduction system 100 can include measuring a position or shape of the wings 70 with one or more of the sensors 104. Measuring a position of the wings 70 can include determining an initial position for the wings 70 prior to flight, during cruise, or at any other suitable time, and periodically monitoring any variation in wing position from the initial position. Similarly, measuring a shape of the wings 70 can include determining an initial shape for the wings 70 prior to flight, during cruise, or at any other suitable time, and periodically monitoring the wings 70 for any change in shape resultant of movement of the wings 70 during flight. Such measurements can be provided as a signal from the sensors 104 to the controller module 102. The controller module 102 can utilize a processor to interpret the signals from the sensors 104 to determine the position or shape of the wings 70, or a change in shape or position of the wings 70.

During flight, environmental conditions such as weather, pressure, wind, or other environmental conditions can generate gust loads 120, which can act upon the wings 70. Such gust loads 120 can results in an uncontrolled increase in lift at the wings 70, which provide a bending moment 124 at the wing root 82. The gust loads 120 acting upon the wings 70 can bend and move the wings 70, which can result in a change in shape or position of the wings 70, measurable by the sensors 104. The gust loads 120 are not always equal at both the first wing 72 and the second wing 74. As shown, the gust load 120 at the first wing 72 is local toward the tip 80 of the first wing, while the gust load 120 at the second wing 74 is local at both the tip 80 as well as somewhat spaced from the tip 80. Therefore, the first wing 72 is oriented in a shape or position that is different from the second wing 74.

The sensors 104 can measure discrete changes in shape or position of each of the wings 70 to determine local gust loads 120 along the wings 70, as illustrated by arrows 122. The sensors 104 can generate a signal representative of the changes in shape or position of the wings 70 and provide the signal to the controller module 102. The controller module 102 can measure the change in shape and position, as well as which portion or portions of the wings 70 have experienced a change in shape or position. Based upon said changes in shape or position, the controller module 102 send a signal to one or more spoilers 92 to deploy one or more spoilers 92 to reduce the local gust load 120. The deployment of the spoilers 92 can be discrete, or can be to all spoilers across the wings 70. More specifically, deployment of the spoilers 92 can be individually, or can be collectively, as controlled by the controller module 102, or as defined by the local gust loads 120. Deployment of the spoilers 92 can reduce the lift generated by the gust load 120, which can optimize the lift profile for the wings 70. As the gust loads 120 can be different across the wings 70, the sensors 104 are able to measure local changes in shape or position, and locally deploy the spoilers 92 based upon the current flight envelope. Deployment of the spoilers 92 can ensure that the bending moment 124 at the root 82 of the wings 70 remains below a threshold bending moment for the wings 70. Such a threshold bending moment can be based on the structural characteristics of the particular wing or wings of the individual aircraft or design thereof. Calculations, such as a finite element analysis, can determine what the limit loading would be for the particular wing. The threshold bending moment can be determined based upon said limit loading. Utilizing the sensors can provide for measure the loading and then reducing the loading prior to reaching the threshold bending moment. Therefore, extra structural material can be removed from the wing to minimize weight. Such removal can require adjustment of the threshold bending moment, utilizing finite element analysis, for example. The sensors can further ensure that the bending moment remains below the adjusted threshold bending moment, providing for the wings having lesser material and therefore lesser overall weight.

Furthermore, the spoilers 92 need not be either undeployed or fully deployed, but can be partially deployed. Such a partial deployment can be based upon the present gust load, or the present bending moment 124, which can be determined as a function of the change in the shape or position of the wings 70. For example, a greater change in shape or position from an initial position can be representative of a greater gust load, which can represent a greater bending moment 124 at the root 82 of the wings 70. As such, partial deployment of the spoilers 92 can be based upon the present change in shape or position of the wings 70, as measured by the sensors 104, while full deployment of the spoilers 92 can be based upon a threshold shape or position of the wings 70. Therefore, the sensors can provide for feedback, which can provide for a continuous reduction of loading on the wing, which can result in smoother flight.

Measurements of the wings 70 by the sensors 104 can be made continuously throughout flight of the aircraft 50. For example, measurements of the change in shape or position can be continuously monitored, being continuously compared with an initial position, or with a prior measurement, to determine a present gust load, or a present change in gust load. Additionally, measuring of the wings 70 can be done discretely, on demand, or can be based upon one or more phases of flight, or in response to acceleration or another flight condition. A present change in gust load can be based upon a change in shape or position or the wings 70 relative to a prior measurement of one or more of the sensors 104. As s gust load increases or decreases, it acts upon the wings 70, resulting in a change in shape or position of the wings 70. The controller module 102 can store or record rates of change in shape or position of the wings 70, which can be representative of the strength of a gust load. Such stored rates can be utilized in future analysis of the controller module 102 to anticipate movement or positioning of the wings based upon the gust loads, which can be used to determine spoiler deployment. As such, the system can anticipate the gust loading, as opposed to being only reactive to gust loading.

Furthermore, the sensor measurement can be specific to each wing 70, as well as to each local portion of the wings 70. As such, the wing loading reduction system 100 can utilize deployment of the spoilers 92 to perform lift balancing among the two wings 70, in order to provide a balanced and stabilized flight.

The wing loading reduction system 100 as described herein utilizing one or more sensors 104 to monitor a shape or position of the wings 70 can deploy one or more spoilers to reduce local wing loading to reduce wing bending moment 124. The wing loading reduction system 100 provides for reducing overall structural weight for the wings of an aircraft, where a traditional aircraft requires a system of spars and ribs suited to withstand worst-case scenario gust loading. The wing loading reduction system 100 permits reduction of the required system of spars and ribs, reducing overall weight and complexity for the wings of the aircraft. Additionally, a reduction in weight provides for improved specific fuel consumption for the aircraft. Furthermore, locally deploying the spoilers 92 based upon a change in shape or position of the wings can provide for local reduction in gust loading, which can provide for local balancing of the lift profile for the aircraft, which can provide for a smoother flight. Furthermore, utilizing the wing loading reduction system 100 provides for reducing the bending moment 124 for the wings or the aircraft. Further still, a tight control of the wing bending moment 124 for the flight envelope operating through turbulence can provide for higher flight efficiency, a reduction of induced drag, and further improved specific fuel consumption. Additionally, as needed, induced drag or lift drag, being proportional to the amount of lift generated, is achieved by elliptical lift distribution across the span of the wings. Thus, discrete measurement of the wings by the sensors can provide for deployment of the spoilers to provide induced drag to modify lift distribution evenly across the wings.

Referring now to FIG. 4, another aircraft 150 can be substantially similar to the aircraft 50 of FIG. 2. As such, similar numerals will be used to describe similar elements, increased by a value of one hundred, and the discussion will be limited to differences between the two. Each wing 170 of the aircraft 150 includes an optical fiber sensor 212 extending at least partially between the root 182 and the tip 180 of the wings 170. The optical fiber 212 can communicatively couple to the controller module 202. The controller module 202 can measure a change in the shape of position of the wings 170 via the optical fiber sensor 212. For example, utilizing Fiber Bragg grating, a change in shape or position of the wings 170 can be translated to the optical fiber sensor 212.Fiber Bragg grating utilizes interference to create a periodic intensity distribution along the interference pattern. A change in shape of the optical fiber can result in a change in the interference pattern distribution. Such a change in the pattern distribution can be resultant of a change in shape or position of the wing 170 carrying the optical fiber sensor 212. Thus, Fiber Bragg grating can utilize a change in the interference pattern to represent a change in shape or position of the optical fiber 212 due to the change in shape or position of the wings 170.

In one example, the optical fiber can be formed as a portion of the skin of the wings 170, such as embedded into a carbon composite on the exterior of the wings 170. Alternatively, the optical fiber sensor 212 could extend interior of the wings 170, such as along spars or ribs within the wings 170.

In operation, a change in shape or position of the wings 170 as measured by the optical fiber sensor 212, as variations in the wavelength of light passing along optical fibers of the optical fiber sensor 212, which can be communicated as a signal to the controller module 202. Based upon the change in shape or position of the wings 170, the controller module 202 can operate one or more of the spoilers 192 to actuate to reduce the lift along the wings 170, effectively reducing the bending moment for the wings 170.

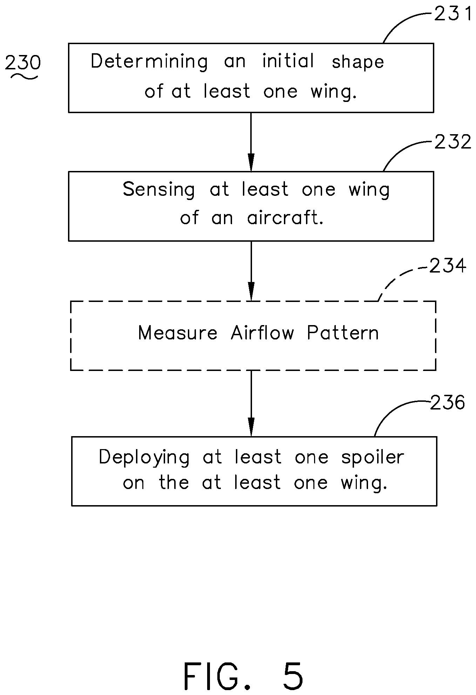

Referring now to FIG. 5, a method 230 of reducing wing loading on an aircraft having a fuselage with at least one wing with deployable spoilers includes: at 231, determining an initial shape of the at least one wing; at 232, sensing at least one wing of an aircraft, which includes sensing, with a sensor, a change in shape of the at least one wing relative to the initial shape of the at least one wing. The sensing at 232 further includes determining when the sensed change in shape exceeds a predetermined threshold, which can be determined by a controller receiving measurements from one or more sensors, for example. Optionally, at 234, the method can include measuring an airflow pattern. At 236, the method 230 includes deploying at least one spoiler of the deployable spoilers when it is determined that the sensed change in shape exceeds the predetermined threshold. The method further includes wherein deploying the at least one spoiler includes discretely deploying the at least one spoiler relative to a local change in shape of the at least one wing.

At 232, sensing the at least one wing can include sensing one of the wings 70, 170 of the aircraft 50, 150 with one or more of the sensors 104, 212. Sensing with the sensors 104, 212 can include measuring a change in shape of the wings 70, 170 to determine the loading on the wings 70, 170. Such a loading can be representative of a bending moment on the wings 70, 170, or at the root 82, 182 of the wings 70, 170. The sensor 104, 212 can be any sensor 104, 212 as described herein, such as an ultrasound sensor, a LIDAR sensor, a RADAR sensor, a camera, or an optical fiber sensor. The optical fiber, for example, can utilize Fiber Bragg grating to sense the change in shape. The sensor can further determine when the change in shape, or a loading based thereon, exceeds a predetermined threshold or value. Such a predetermined threshold can be based upon a change in shape relative to an initial shape of the wing, which can be measured prior to flight, or during flight, such as at cruise. Similarly, the predetermined threshold can be a predetermined loading on the wing, or a predetermined bending moment based upon the loading or the change in shape.

The method can further include wherein determining a loading on the at least one wing based on the sensed change in shape of the at least one wing. Furthermore, the method can include wherein deploying the at least one spoiler is when it is determined that the loading on the at least one wing exceeds a predetermined loading threshold, such as a maximum loading for the particular wing, fuselage, or aircraft. The method includes a change in shape of the at least one wing. For example, a loading on the wing causes the wing to bend, resulting in a change in shape as determined based upon the initial shape of the wing. The method can include wherein the sensor is one of an ultrasound sensor, a LIDAR sensor, a RADAR sensor, a camera, or an optical fiber. The method can further include wherein sensing the change in shape includes sensing with an optical fiber extending at least partially through the at least one wing utilizing Fiber Bragg grating.

A local change in shape can be determined as a change in shape of a discrete portion of the wing. For example, gust loading may cause the tip of the wing to bend more than the wing at the root. Therefore, the spoiler can be further deployed local to the tip to decreasing the loading at the tip. Furthermore, a local change in shape of the at least one wing can be discrete, such as measured from a previously recorded shape of the wing, which may differ from the initial shape of the wing.

Therefore, the sensors can monitor the discrete change in the wing to measure the current loading or change in loading of the wing, as opposed to only the initial shape of the wing. Further, the method can include discretely deploying the at least one spoiler which includes balancing lift among a pair of wings of the at least one wing. The sensors can utilize measurements of a pair of wings on either side of the fuselage to balance the loading with discrete deployment of the spoilers. This can provide for a smoother ride for the aircraft, as well as decreasing the loading on the wings. The method can further include balancing the lift, which further includes equalizing the shape of the pair of wings relative to the fuselage with the at least one spoiler. Equalizing can include conforming the current shape of one wing to match another wing, in order to balance the loading on the wings to provide for level flight of the aircraft.

The method can optionally include using LIDAR to measure the shape of the wing to determine local loading based upon a change in shape of the wing. LIDAR can be used to form a point cloud to deduce a shape of the wing, or variation thereof based upon movement of the wing.

The method can optionally include, at 234, measuring an airflow pattern to anticipate a shape of the wings 70, 170. A LIDAR sensor can be used to determine an anticipated bending moment based upon the airflow pattern. For example, LIDAR can alternatively be used to measure an incoming airflow pattern, which can be used to anticipate a change in shape of the wings, therefore anticipating a loading or bending moment on the wings 70, 170. Such anticipation can be used to pre-emptively deploy, or schedule deployment of the spoilers 92, 192.

At 236, the controller module 102, 202 can deploy one or more of the spoilers 92, 192, based upon a sensed change in shape of the wings 70, 170 exceeding the predetermined value or threshold. Deploying the spoilers 92, 192 provides for reducing the lift at the wings 70, 170, which can reduce loading and bending moment acting upon the wings 70, 170. The spoilers 92, 192 can be deployed discretely, based upon local shape changes to the wings 70, 170 as measured by the sensors 104, 212. Discrete deployment of the spoilers 92, 192 can provide for equalizing the lift among both wings 70, 170 to provide for an equalized position for the wings 70, 170 and a smoother flight.

The wing loading reduction system as described herein can be suitable aircraft or other vehicles subject to fluid loading along a portion of the vehicle. It should be appreciated that the wing loading reduction system provides for monitoring loading and reducing such loading with one or more spoilers on the wings. Utilizing one or more sensors, measurements of the shape of the wings can be provided to a controller module, representative of the loading on the wings. The controller module can control operation of the spoilers to locally reduce the loading along the wings via the spoilers. Therefore, effective monitoring of loading along the wings can be monitored and managed throughout flight of the aircraft. Overall weight of the wings can be decreased, requiring less structure, such as reduced spars and ribs extending along the wings. A decreased weight leads to improved specific fuel consumption. Additionally, the wing loading reduction system can provide for an improved lift profile for the aircraft, providing for a smoother flight as well as higher flight efficiency, reduced induced drag, and improved specific fuel consumption.

The aspects disclosed herein provide a method and apparatus for reducing bending moment for a wing of an aircraft. The technical effect is that the above described aspects enable the monitoring and measuring of a loading on the wings of an aircraft as measured by a change in shape of the wing during aircraft operation, as described herein. Such monitoring and measuring can be accomplished by utilizing one or more sensors connected to a controller, which can utilize the measurements of the sensor(s). The assembly as described herein can be suitable for different or all types of aircraft, wings, or flight implementations. It should be appreciated that the assembly provides for effectively monitoring loading on a wing and reducing the loading through deployment of one or more spoilers on the wings. Utilizing the one or more sensors, measurements of the shape of the wings can be provided to a controller module. The controller module can determine a difference in the measured shape of the wing based upon an initial shape of the wing to determine a loading on the wing. Utilizing the loading and change in shape, the controller can compare the current loading to a threshold loading value. If the current loading meets or exceeds the threshold, the spoilers can be deployed or partially deployed to reduce the loading on the wings. Such an assembly or method can provide for real time reducing of wing loading, and can be done locally. This method provides for real-time monitoring and change in loading, where other methods may be unable to measure such loading where a wing velocity or acceleration is constant at maximum loading. This method and assembly also provides for reducing the structural weight and complexity of the aircraft, as less structural members are required to maintain operation at a maximum loading.

To the extent not already described, the different features and structures of the various features can be used in combination with each other as desired, as long as they fall within the scope of the claims. That one feature is not illustrated in all of the aspects of the disclosure is not meant to be construed that it cannot be, but is done for brevity of description. Thus, the various features of the different aspects described herein can be mixed and matched as desired to form new features or aspects thereof, whether or not the new aspects or features are expressly described. All combinations or permutations of features described herein are covered by the appended claims.

This written description uses examples to detail the aspects described herein, including the best mode, and to enable any person skilled in the art to practice the aspects described herein, including making and using any devices or systems and performing any incorporated methods. The patentable scope of the aspects described herein are defined by the claims, and may include other examples that occur to those skilled in the art. Such other examples are intended to be within the scope of the claims if they have structural elements that do not differ from the literal language of the claims.

## Claims

1. A method of reducing wing bending moment on an aircraft (10) having a fuselage (12) with at least one wing (14) with deployable spoilers (92), the method comprising:
determining an initial shape of the at least one wing (14);
sensing, with a sensor (104), a change in shape of the at least one wing (14) relative to the initial shape of the at least one wing (14);
determining when the sensed change in shape exceeds a predetermined threshold; and
deploying at least one spoiler (92) of the deployable spoilers (92) when it is determined that the sensed change in shape exceeds the predetermined threshold;
wherein the deploying the at least one spoiler (92) includes discretely deploying the at least one spoiler (92) relative to a local change in shape of the at least one wing (14).

2. The method of claim 1 further comprising determining a loading on the at least one wing (14) based on the sensed change in shape.

3. The method of claim 1 or 2 wherein deploying at least one spoiler (92) of the deployable spoilers (92) is when it is determined that the loading on the at least one wing (14) exceeds a predetermined loading threshold.

4. The method of any of claims 1 to 3 wherein the sensor (104) is one of an ultrasound sensor (104), a LIDAR sensor (104), a RADAR sensor (104), a camera (104), or an optical fiber (212).

5. The method of any of claims 1 to 4 wherein sensing the change in shape includes sensing with an optical fiber (212) extending at least partially within the at least one wing (14) utilizing Fiber Bragg grating.

6. The method of any of claims 1 to 5 further comprising measuring an airflow pattern at the leading edge (76) of the at least one wing (14) to anticipate a bending moment of the at least one wing (14) and wherein deploying the at least one spoiler (92) is based upon the anticipated bending moment.

7. The method of claim 6 wherein measuring the airflow pattern further includes measuring the airflow pattern with a LIDAR sensor (104).

8. The method of any preceding claim wherein discretely deploying the at least one spoiler (92) further includes balancing lift among a pair of wings (16, 18) of the at least one wing (14).

## Patentansprüche

1. Verfahren zum Reduzieren eines Tragflächenbiegemoments an einem Luftfahrzeug (10), das einen Rumpf (12) mit wenigstens einer Tragfläche (14) mit ausfahrbaren Spoilern (92) aufweist, wobei das Verfahren Folgendes umfasst:
Bestimmen einer Ausgangsform der wenigstens einen Tragfläche (14);
Erfassen, mit einem Sensor (104), einer Formänderung der wenigstens einen Tragfläche (14) relativ zu der Ausgangsform der wenigstens einen Tragfläche (14);
Bestimmen, wann die erfasste Formänderung einen zuvor bestimmten Schwellenwert überschreitet; und
Ausfahren wenigstens eines Spoilers (92) der ausfahrbaren Spoiler (92), wenn bestimmt wird, dass die erfasste Formänderung den zuvor bestimmten Schwellenwert überschreitet;
wobei das Ausfahren des wenigstens einen Spoilers (92) das separate Ausfahren des wenigstens einen Spoilers (92) relativ zu einer lokalen Formänderung der wenigstens einen Tragfläche (14) beinhaltet.

2. Verfahren nach Anspruch 1, das ferner das Bestimmen einer Belastung auf die wenigstens eine Tragfläche (14) basierend auf der erfassten Formänderung umfasst.

3. Verfahren nach Anspruch 1 oder 2, wobei das Ausfahren wenigstens eines Spoilers (92) der ausfahrbaren Spoiler (92) erfolgt, wenn bestimmt wird, dass die Belastung auf die wenigstens eine Tragfläche (14) einen zuvor bestimmten Belastungsschwellenwert überschreitet.

4. Verfahren nach einem der Ansprüche 1 bis 3, wobei der Sensor (104) ein Ultraschallsensor (104), ein LIDAR-Sensor (104), ein RADAR-Sensor (104), eine Kamera (104) oder eine Lichtleitfaser (212) ist.

5. Verfahren nach einem der Ansprüche 1 bis 4, wobei das Erfassen der Formänderung das Erfassen mit einer Lichtleitfaser (212) beinhaltet, die sich wenigstens teilweise innerhalb der wenigstens einen Tragfläche (14) unter Verwendung eines Faser-Bragg-Gitters erstreckt.

6. Verfahren nach einem der Ansprüche 1 bis 5, das ferner ein Messen eines Luftströmungsprofils an der Vorderkante (76) der wenigstens einen Tragfläche (14) umfasst, um ein Biegemoment der wenigstens einen Tragfläche (14) zu antizipieren, und wobei das Ausfahren des wenigstens einen Spoilers (92) auf dem antizipierten Biegemoment basiert.

7. Verfahren nach Anspruch 6, wobei das Messen des Luftströmungsprofils ferner das Messen des Luftströmungsprofils mit einem LIDAR-Sensor (104) beinhaltet.

8. Verfahren nach einem der vorhergehenden Ansprüche, wobei das separate Ausfahren des wenigstens einen Spoilers (92) ferner ein Ausgleichen des Auftriebs zwischen einem Paar von Tragflächen (16, 18) der wenigstens einen Tragfläche (14) beinhaltet.

## Revendications

1. Procédé de réduction du moment de flexion d'aile sur un aéronef (10) ayant un fuselage (12) avec au moins une aile (14) dotée de déporteurs déployables (92), le procédé comprenant :
la détermination d'une forme initiale de l'au moins une aile (14) ;
la détection, à l'aide d'un capteur (104), d'un changement de forme de l'au moins une aile (14) par rapport à la forme initiale de l'au moins une aile (14) ;
la détermination du moment où le changement de forme détecté dépasse un seuil prédéterminé ; et
le déploiement d'au moins un déporteur (92) parmi les déporteurs déployables (92) lorsqu'il est déterminé que le changement de forme détecté dépasse le seuil prédéterminé ;
dans lequel le déploiement de l'au moins un déporteur (92) comporte le déploiement discret de l'au moins un déporteur (92) par rapport à un changement local de forme de l'au moins une aile (14).

2. Procédé selon la revendication 1, comprenant en outre la détermination d'une charge sur l'au moins une aile (14) sur la base du changement de forme détecté.

3. Procédé selon la revendication 1 ou 2, dans lequel le déploiement d'au moins un déporteur (92) parmi les déporteurs déployables (92) se produit lorsqu'il est déterminé que la charge sur l'au moins une aile (14) dépasse un seuil de charge prédéterminé.

4. Procédé selon l'une quelconque des revendications 1 à 3, dans lequel le capteur (104) est l'un d'un capteur à ultrasons (104), d'un capteur LIDAR (104), d'un capteur RADAR (104), d'une caméra (104) ou d'une fibre optique (212).

5. Procédé selon l'une quelconque des revendications 1 à 4, dans lequel la détection du changement de forme comporte la détection à l'aide d'une fibre optique (212) s'étendant au moins partiellement à l'intérieur de l'au moins une aile (14) en utilisant un réseau de Bragg sur fibre.

6. Procédé selon l'une quelconque des revendications 1 à 5, comprenant en outre la mesure d'un modèle d'écoulement d'air au niveau du bord d'attaque (76) de l'au moins une aile (14) pour anticiper un moment de flexion de l'au moins une aile (14) et dans lequel le déploiement de l'au moins un déporteur (92) est basé sur le moment de flexion anticipé.

7. Procédé selon la revendication 6, dans lequel la mesure du modèle d'écoulement d'air comporte en outre la mesure du modèle d'écoulement d'air à l'aide d'un capteur LIDAR (104).

8. Procédé selon l'une quelconque des revendications précédentes, dans lequel le déploiement discret de l'au moins un déporteur (92) comporte en outre l'équilibrage de la portance parmi une paire d'ailes (16, 18) de l'au moins une aile (14).
